# EUROPEAN PATENT SPECIFICATION

(11) **EP 3 979 243 B1**
(45) Date of publication and mention of the grant of the patent: **01.10.2025**
(21) Application number: 19930893.3
(22) Date of filing: 31.05.2019
(51) Int. Cl.: G11B 19/20, G11B 3/60, G11B 33/10, G11B 27/34, G10H 1/00, G10H 1/055

(54) **DISPLAY DEVICE AND OPERATING DEVICE**
ANZEIGEVORRICHTUNG UND BETRIEBSVORRICHTUNG
DISPOSITIF D'AFFICHAGE ET DISPOSITIF D'ACTIONNEMENT

(43) Date of publication of application: 06.04.2022
(73) Proprietor: AlphaTheta Corporation, Nishi-ku, Yokohama-shi Kanagawa 220-0012 (JP)
(72) Inventor: INOUE Hiroya, Yokohama-shi, Kanagawa 220-0012 (JP); TAKAGI Nao, Yokohama-shi, Kanagawa 220-0012 (JP)
(74) Representative: Gille Hrabal Partnerschaftsgesellschaft mbB Patentanwälte
(86) International application number: PCT/JP2019/021832
(87) International publication number: WO 2020/240855

(56) References cited:
- EP-A2- 1 394 791
- WO-A1-97/33282
- JP-A- 2004 088 259
- JP-U- 3 182 500
- US-A1- 2006 039 245
- US-A1- 2008 148 922
- US-A1- 2011 094 369
- US-A1- 2012 230 175

## Description

### TECHNICAL FIELD

The present invention relates to a display device and an operation device.

### BACKGROUND ART

There is conventionally known an optical disk playing device including a jog dial to be operated by an operator such as a DJ and a jog display unit provided at a center portion of the jog dial (see, for example, Patent Literature 1).

In the optical disk playing device described in Patent Literature 1, the jog display unit displays, on a circumference thereof, a waveform of an audio output signal of an audio stream by a time corresponding to one rotation of an analog record set to rotate at 33 rpm (i.e., 60/33 seconds). Further, the jog display unit displays a playing position so that the playing position moves clockwise on the circumference of the jog display unit at the same speed as the rotation speed of the analog record.

### CITATION LIST

### PATENT LITERATURE(S)

Patent Literature 1: JP 2011-141948 A.

WO97 33282 A1 discloses a device and a method for controlling the playback speed of a compact disc inserted into a playback device. In order to be able to individually influence the rotational speed of a CD, including playing the frames in reverse order, it is proposed that the CD player be connected to a turntable with a motor-driven turntable in such a way that the current turntable speed or the speed of rotation of a disc arranged on the turntable supplies the manipulated variable for the CD playback speed.

EP 1 394 791 A2 discloses a reading section reading information recorded in an optical disk and outputs a read signal. A DSP detects the read signal, and make it reproducible. An operational instruction recognizing section recognizes an instruction for a specified position of the information. Then a display control section makes a cue point position display section of a display section display an instructed position. Because of this feature, the specified instructed position can be recognized easily and accurately.

US 2006 039245 A1 discloses a digital and analog audio playback apparatus including a control unit operable, whereby manual rotation of the vinyl record on the turntable unit while the control unit operates in the certain mode results in generation of a control signal by a pick-up device. The control unit is responsive to the control signal so as to control reading of the digital audio data from the optical recording medium in order to impart a scratch effect to the second audio output data.

US 2008 148922 A1 discloses a scratch interface tactilely interacted by a user and adapted for positioning on a digital turntable. The user interacts with a vinyl user surface of the scratch interface, permitting the user to manipulate the musical output of the digital turntable.

### SUMMARY OF THE INVENTION

### PROBLEM(S) TO BE SOLVED BY THE INVENTION

Some DJs prefer a record player to a device including a jog dial, such as a DJ player. Further, a DJ preferring a record player may mark a record disk at a desired playing position such as a music change position (a so-called cue point) with a sticker or the like.

Meanwhile, there is a product that reads operation information of a record disk on a record player by a computer and plays a music file in the computer. A recent DJ application can quickly move a playing position to a cue point by setting in advance the cue point at a desired position in music data and calling up the cue point. However, when the playing position is moved to the cue point, a positional relationship between the playing position and a mark on the record disk may be changed. Thus, a DJ needs to have the marked position on the record disk correspond to the playing position before calling up the cue point on the application, which takes effort.

In order to solve this problem, for example, it is conceivable that the jog display unit in the optical disk playing device described in Patent Literature 1 displays a cue point set in music data being played in such a similar manner that the playing position is displayed. That is, it is conceivable that the cue point is displayed to move clockwise on the circumference of the jog display unit at the same speed as the rotation speed of the analog record. In this arrangement, the position of the cue point on the jog display unit needs to be changed according to the rotation state of the jog dial.

However, the cue point is typically moved after a rotation direction and a rotation amount of the jog dial are detected, likely resulting in a lag between rotation of the jog dial and moving of the cue point. This problem greatly affects, for example, a scratch operation performed on a jog dial.

An object of the invention is to solve at least a part of the above problem and to provide a display device and an operation device capable of displaying a marker corresponding to a point set in a music piece.

### MEANS FOR SOLVING THE PROBLEM(S)

A display device according to a first aspect of the invention includes the features of claim 1. Advantageous embodiments are subject matter of the dependent claims.

An operation device according to a second aspect of the invention includes: the features of claim 7.

In the display device according to the first aspect and the operation device according to the second aspect, a marker corresponding to a point set in a music piece can be displayed.

### BRIEF DESCRIPTION OF DRAWING(S)

Fig. 1 schematically shows a configuration of a playing system according to an exemplary embodiment.
Fig. 2 is a block diagram showing a configuration of a playing device according to the exemplary embodiment.
Fig. 3 is a plan view of an external appearance of an operation unit according to the exemplary embodiment.
Fig. 4 schematically shows an internal configuration of the operation unit according to the exemplary embodiment.
Fig. 5 is a block diagram showing a configuration of a controller of the operation unit according to the exemplary embodiment.
Fig. 6 is a flowchart showing a marker display process according to the exemplary embodiment.

### DESCRIPTION OF EMBODIMENT(S)

An exemplary embodiment of the invention is described below with reference to the attached drawings.

### Schematic Configuration of Playing System

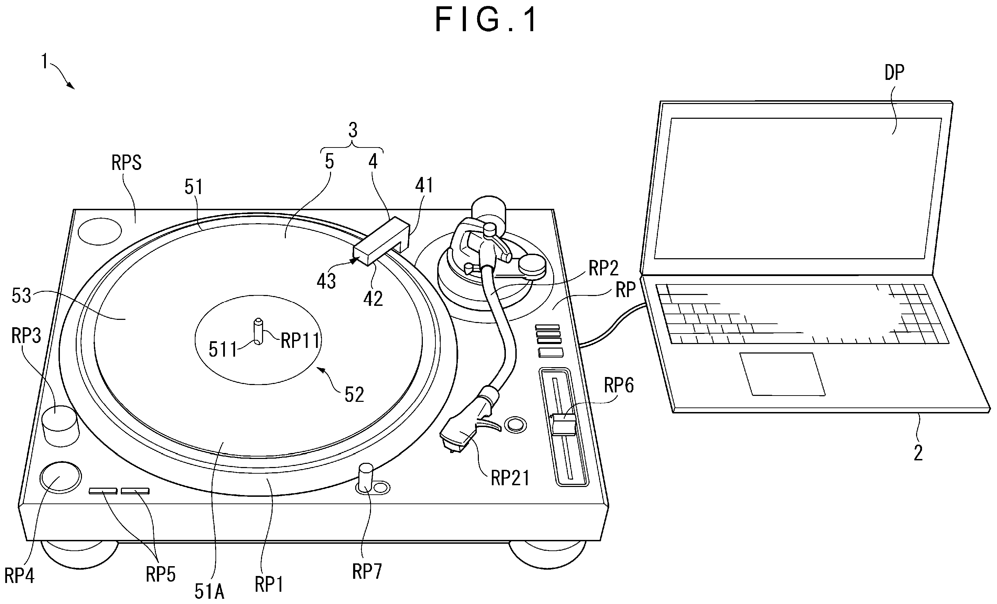

Fig. 1 schematically shows a configuration of a playing system 1 according to the exemplary embodiment.

As shown in Fig. 1, the playing system 1 according to the exemplary embodiment includes a playing device 2 and an operation device 3 provided to a record player RP. The operation device 3 includes a stationary body 4 and an operation unit 5. The playing system 1 plays a music piece in response to an operator's operation performed on a turntable RP1 of the record player RP and displays a marker corresponding to a point, such as a cue point, set in music data by an operator in advance.

Details of the playing system 1 are described below.

### Configuration of Playing Device

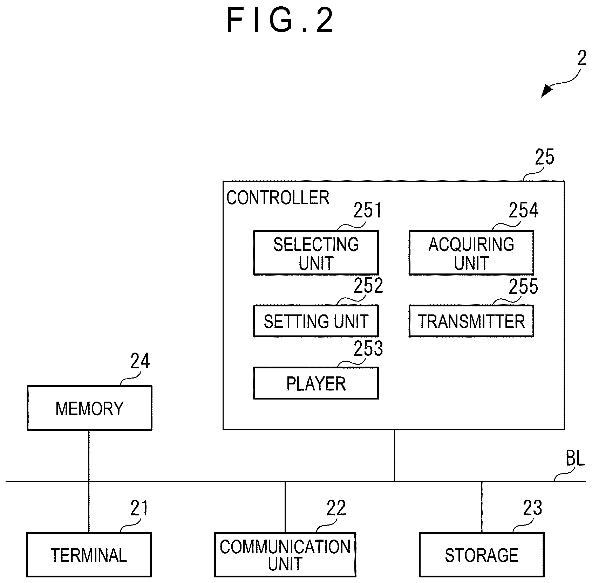

Fig. 2 is a block diagram showing a configuration of the playing device 2.

The playing device 2 plays a music piece by playing music data and adds a variety of sound effects to the music piece being played in accordance with operation information received from the operation unit 5. Further, the playing device 2 transmits, to the operation unit 5, display information to be displayed on a display 52 (described below) of the operation unit 5. The playing device 2 may be provided, for instance, by an information processing device such as a personal computer (PC).

As shown in Fig. 2, the playing device 2 includes a terminal 21, a communication unit 22, a storage 23, a memory 24 and a controller 25, which are connected via a bus-line BL.

The terminal 21 is connected to an input device such as a mouse (not shown) and a keyboard and also to a display DP configured to display an operation screen of the playing device 2. The terminal 21 outputs an input signal input from the connected input device to the controller 25 and outputs an image signal for the operation screen to the display DP.

The communication unit 22 communicates wirelessly with an external device such as the operation unit 5. For example, the communication unit 22 outputs an operation signal received from the operation unit 5 to the controller 25 and transmits display information input from the controller 25 to the operation unit 5. In the exemplary embodiment, the communication unit 22 and the operation unit 5 communicate with each other using a communication system in accordance with Near Field Communication standards, such as Bluetooth (registered trademark), although any other communication system may be used for communication therebetween.

The storage 23 includes a hard disk drive (HDD) and/or a solid state drive (SSD). The storage 23, for example, stores not only music data but also a marker set by an operator for each music piece.

The memory 24 serves as a working memory for the controller 25. The memory 24, for example, temporarily stores the music data stored in the storage 23.

The controller 25, which includes an operation processing circuit such as a central processing unit (CPU), controls the playing device 2. The controller 25 includes a selecting unit 251, a setting unit 252, a player 253, an acquiring unit 254 and a transmitter 255.

The selecting unit 251 selects music data selected by an operator from among music data stored in the storage 23 in accordance with an input signal input from the terminal 21.

The setting unit 252 sets a point at a position specified by an operator in the music data selected by the selecting unit 251, in accordance with the input signal input from the terminal 21. Specifically, the point setting by the setting unit 252 is performed by associating a time at which the point is specified in the selected music data (i.e., a specified time in the music data) with the music data and storing the associated time of the point in the storage 23.

It should be noted that the point refers to a cue point set in music data by an operator and usable for cueing the music data, or a scratch point in the music piece. A plurality of points can also be set in a single piece of music data.

The player 253 plays the music data selected by the selecting unit 251 in response to a playing operation performed by the operator. At this time, the player 253 adds a variety of sound effects to the music data being played in accordance with operation information received by the communication unit 22.

The acquiring unit 254 acquires point information, which is information regarding the point set in the music data being played. The point information includes a time of a play start position where the player 253 starts playing music data and a time of the point set in the music data. The time of the point set in the music data refers to a time specified as a point in the music data (specified time). It should be noted that marker information may be information including a time from a play start position to a point in the music data.

The transmitter 255 transmits the point information acquired by the acquiring unit 254 to the operation unit 5. The operation unit 5 displays a marker based on the point information transmitted by the transmitter 255, as described below in detail.

### Configuration of Record Player

Here, an example of the record player RP provided with the operation device 3 is explained.

As shown in Fig. 1, the record player RP, which is configured to play an analog record disk (hereinafter abbreviated as a record disk), is used for DJ performance in a concert or club scene. The record player RP includes the turntable RP1, a tone arm RP2, a power switch RP3, a start/stop button RP4, speed change buttons RP5, a tempo slider RP6 and an illuminator RP7.

The turntable RP1 has a circular shape on which a record disk is placeable. The turntable RP1 is rotatably provided substantially at a center portion of a top surface RPS of the record player RP. The turntable RP1 is rotated by a motor (not shown) accommodated in the record player RP.

The tone arm RP2 is provided pivotally with a corner of the top surface RPS as the center. A headshell RP21 is provided at an end of the tone arm RP2. A cartridge attached with a stylus for playing a record disk is installed at an end of the headshell RP21.

In a case of playing a music piece recorded on the record disk, the turntable RP1 on which the record disk is placed is rotated at a constant speed and the stylus provided at the end of the tone arm RP2 is put on the record disk. In this state, an operator can do DJ performance, such as scratch or pitchbend, by rotating the turntable RP1 forwardly or reversely or reducing the rotation speed.

The power switch RP3 and the start/stop button RP4 are provided on the left of the turntable RP1. An operator can rotate or stop the turntable RP1 by operating the power switch RP3 or the start/stop button RP4.

The speed change buttons RP5 are provided on the right of the start/stop button RP4. Operating the speed change button(s) RP5 by an operator makes it possible to set the rotation speed of the turntable RP1 at 33 RPM suitable for playback of a long-playing record (LP disk) or to set the rotation speed of the turntable RP1 at 45 RPM suitable for playback of an extended play record (EP disk).

The tempo slider RP6 is provided on the right of the tone arm RP2. An operator can adjust a playing speed of the record disk by operating the tempo slider RP6.

The illuminator RP7 is provided on the right of an outer circumference of the turntable RP1. The illuminator RP7 illuminates a position where the stylus is to be put on the record disk.

### Configuration of Operation Device

The operation device 3 transmits operation information corresponding to an operator's input operation performed on the turntable RP1 to the playing device 2. Specifically, the operation device 3 transmits operation information including rotation information showing a rotation state of the turntable RP1 (i.e., rotation information including a rotation angle, rotation direction and rotation speed of the turntable RP1).

The operation device 3 includes the stationary body 4 and the operation unit 5.

### Configuration of Stationary Body

The stationary body 4 is provided to be removable on a part of the top surface RPS of the record player RP other than an area where the turntable RP1 is provided. That is, the stationary body 4 is attachable to any position on the top surface RPS other than an area where the turntable RP1 is provided.

The stationary body 4, which is formed into a substantially L-shape, includes a standing portion 41 that stands on the top surface RPS in a normal direction of the top surface RPS and an extending portion 42 that is bent at a tip of the standing portion 41 and extends substantially in parallel with the top surface RPS.

In the stationary body 4, the extending portion 42 contains a magnetic body 43. The magnetic body 43 generates a magnetic field acting on hall elements 54 provided to the operation unit 5, which is placed on the turntable RP1.

### External Configuration of Operation Unit

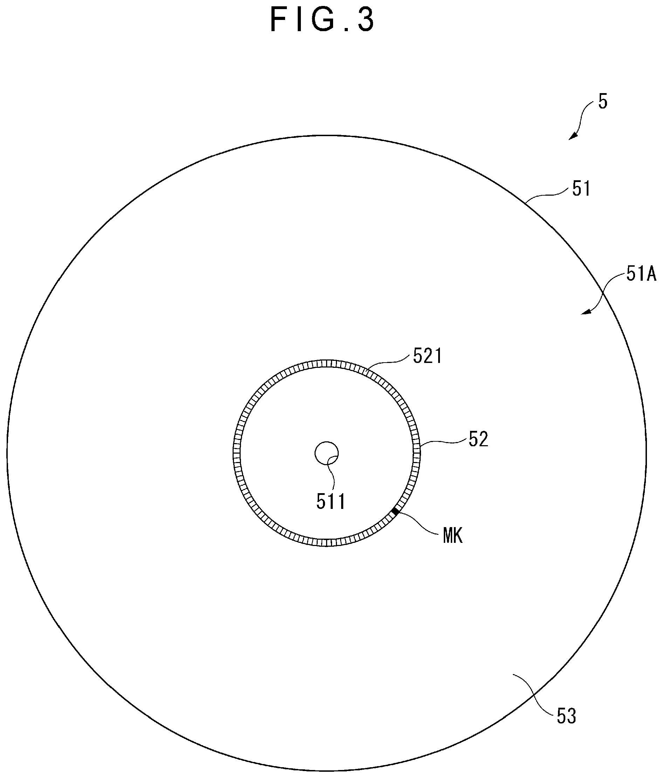

Fig. 3 is a plan view of an external appearance of the operation unit 5.

The operation unit 5, which is placed on the turntable RP1, transmits operation information corresponding to an operator's operation. Additionally, the operation unit 5 displays a marker MK corresponding to a point based on point information received from the playing device 2. That is, the operation unit 5 also serves as a display device configured to display the marker.

As shown in Fig. 3, the operation unit 5 includes a rotating body 51, the display 52 and a touch sensor 53. The display 52 and the touch sensor 53 are provided to the rotating body 51.

The rotating body 51 is formed into a disk shape similar to a record disk. The rotating body 51 is placed on the turntable RP1 to rotate with the turntable RP1. An operator directly operates the rotating body 51. The rotating body 51 has, in substance, a diameter as follows. When the rotating body 51 is placed on the top surface RPS, the extending portion 42 of the stationary body 4 partially overlaps with the rotating body 51 as seen from a position facing the top surface RPS. Specifically, the diameter of the rotating body 51 is substantially the same as a diameter of the LP disk.

A hole 511 is provided at a center portion of the rotating body 51. A boss RP11 protruding at a center portion of the turntable RP1 is inserted into the hole 511.

The display 52 is arranged in an inner region of the rotating body 51 along a circumferential direction of the rotating body 51. Specifically, assuming the rotating body 51 to be a record disk, the display 52 is provided at a position corresponding to an outer circumference of a region of the record disk where a label is adhered.

The display 52 includes a plurality of light-emitting bodies 521 arranged concentrically around the hole 511 of the rotating body 51 with no space therebetween. In other words, the display 52 includes the plurality of light-emitting bodies 521 arranged concentrically around a rotation center of the rotating body 51. It should be noted that, for example, a solid-state light source such as an LED can be used for the light-emitting body 521. Further, it is more preferable that many light-emitting bodies 521 are provided around the rotation center of the rotating body 51.

Display on the display 52 is controlled by a display controller 60 (described below). For example, the display 52 shows the marker MK corresponding to the point described above on a part of the plurality of light-emitting bodies 521. At this time, the display 52 displays a time from a playing position to the point in the music data in a form of a lighting state of the light-emitting body 521 showing the marker MK.

The touch sensor 53 detects an operator's pressing operation (touch operation) performed on the rotating body 51. Upon detecting the operator's pressing operation, the touch sensor 53 outputs a control signal to a controller 57 (described below). In the exemplary embodiment, in the surface 51A being a surface of the rotating body 51 opposite to the turntable RP1, the touch sensor 53 is provided over a substantially entire portion outside the display 52. Any sensing system that can detect an operator's pressing operation may be used for the touch sensor 53, such as an electrostatic capacitance system.

### Internal Configuration of Operation Unit

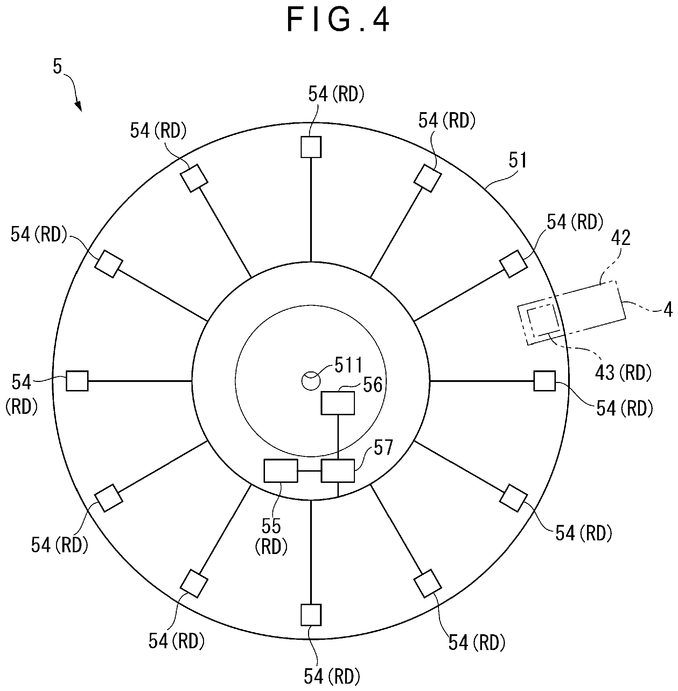

Fig. 4 schematically shows an internal configuration of the operation unit 5.

As shown in Fig. 4, the operation unit 5 includes the hall elements 54, a gyroscope sensor 55, a communication unit 56 and the controller 57, which are provided in the rotating body 51, in addition to the rotating body 51, the display 52 and the touch sensor 53 described above.

The hall elements 54 and the magnetic body 43 define a rotation detecting unit RD configured to detect a rotation state of the rotating body 51. That is, the operation device 3 includes the rotation detecting unit RD.

The hall elements 54 are arranged at regular intervals along an outer circumference of the disk-shaped rotating body 51. That is, the hall elements 54 are arranged at regular intervals along the circumferential direction of the rotating body 51 to overlap with the magnetic body 43 as seen from a position facing the top surface RPS when the rotating body 51 is rotated with the turntable RP1. Although 12 hall elements 54 are provided in the exemplary embodiment, the number of the hall elements 54 is not limited thereto.

The hall elements 54 are each independently connected to the controller 57. When each hall element 54 approaches the magnetic body 43 by rotating the rotating body 51 together with the turntable RP1, each hall element 54 outputs, to the controller 57, electromotive force generated by Hall effect under a magnetic field generated in the magnetic body 43.

The gyroscope sensor 55 detects not only the rotation state of the rotating body 51 but also the rotation state of the turntable RP1 and defines the rotation detecting unit RD. That is, the gyroscope sensor 55 detects not only an angular velocity in the circumferential direction of the rotating body 51 but also an angular velocity of the turntable RP1. The gyroscope sensor 55 outputs the detected angular velocities to the controller 57.

The communication unit 56 communicates with the playing device 2 under control of the controller 57 using the communication system described above. The communication unit 56 outputs point information received from the playing device 2 to the controller 57 and transmits operation information generated by the controller 57 to the playing device 2.

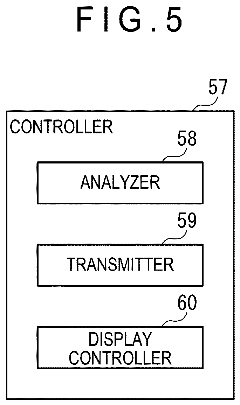

Fig. 5 is a block diagram showing a configuration of the controller 57.

The controller 57 is a module including a circuit element driven by electric power supplied from a battery (not shown). The controller 57 controls operation of the operation unit 5, such as displaying on the display 52. As shown in Fig. 5, the controller 57 includes an analyzer 58, a transmitter 59 and the display controller 60.

The analyzer 58 analyzes a rotation state of the rotating body 51 (i.e., a rotation state of the turntable RP1) based on an electric signal input from each hall element 54 and an angular velocity input from the gyroscope sensor 55. Specifically, the analyzer 58 analyzes, as the rotation state of the rotating body 51, a rotation angle, rotation direction, and rotation speed of the rotating body 51.

For instance, the analyzer 58 can analyze the rotation direction by analyzing a waveform of the electric signal input from the hall element 54. Further, the analyzer 58 can analyze the rotation speed based on the number of the hall elements 54 which output the electric signal per unit time from among the hall elements 54 arranged at regular intervals along the circumferential direction of the rotating body 51. The same applies to the rotation angle. Further, the analyzer 58 can analyze the rotation direction, rotation speed and rotation angle of the rotating body 51 based on the angular velocity input from the gyroscope sensor 55. Thus, the operation unit 5 only needs to include at least any of the hall elements 54 or the gyroscope sensor 55 in terms of analyzing the rotation state of the rotating body 51.

Further, the analyzer 58 corrects an error in the rotation state of the rotating body 51 analyzed based on the electric signal input from each hall element 54 by using the rotation state of the rotating body 51 analyzed based on the angular velocity input from the gyroscope sensor 55. The analyzer 58 corrects an error in the rotation state of the rotating body 51 analyzed based on the angular velocity input from the gyroscope sensor 55 by using the rotation state of the rotating body 51 analyzed based on the electric signal input from each hall element 54. The analyzer 58 can thus analyze the rotation states of the rotating body 51 and the turntable RP1 accurately.

The transmitter 59 wirelessly transmits various types of information via the communication unit 56. For example, the transmitter 59 transmits operation information including rotation information showing the rotation state of the rotating body 51 analyzed by the analyzer 58, as rotation information showing the rotation state of the turntable RP1. Further, the transmitter 59 transmits operation information showing an operator's pressing operation detected by the touch sensor 53.

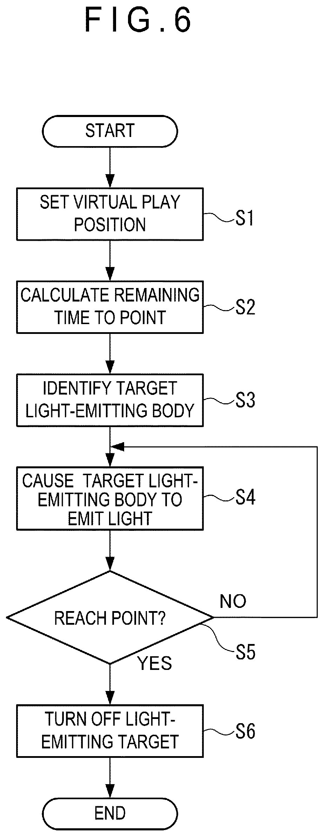

Fig. 6 is a flowchart showing a marker display process performed by the display controller 60.

The display controller 60 controls displaying on the display 52. For example, the display controller 60 displays the marker MK corresponding to the point set in the music data being played on the display 52 based on the point information received from the playing device 2.

Specifically, upon receiving the point information including the time of the play start position where the player 253 starts playing the music data and the time of the point (specified time) set in the music data, the display controller 60 performs a marker display process shown in Fig. 6 to display the marker MK on the display 52.

In the marker display process, the display controller 60 first sets a virtual playing position, assuming the operation unit 5 rotating with the turntable RP1 to be a record disk (Step S1).

Here, although the operation unit 5 is placed on the turntable RP1, the stylus provided to the tone arm RP2 is not put on the operation unit 5. Thus, an operator cannot identify a current playing position corresponding to the position of the stylus when assuming the operation unit 5 to be a record disk.

Meanwhile, in the exemplary embodiment, the record player RP is provided with the stationary body 4 covering a part of the operation unit 5. Further, the stationary body 4 includes the magnetic body 43 that generates Hall effect with the hall elements 54. Thus, when assuming a position of the stationary body 4 to be the position of the stylus, not only an operator can easily identify the virtual playing position on the operation unit 5 but also the controller 57 can identify the position of the stationary body 4 based on the electric signal input from each hall element 54.

Thus, the display controller 60 identifies the position of the stationary body 4 with respect to the operation unit 5 based on the electric signal input from each hall element 54 and sets the identified position of the stationary body 4 as the virtual playing position.

Next, the display controller 60 calculates a remaining time from a playing position in the music data being played at a timing of receiving the point information (i.e., current playing position) to the point based on the received point information (Step S2). Specifically, the display controller 60 calculates the remaining time by subtracting the time of the play start position included in the point information from the time of point (specified time) included in the point information.

The reason why the display controller 60 performs Step S2 is that there may be a case where the player 253 does not play music data from the beginning based on an operator's input operation.

Subsequently, the display controller 60 identifies a light-emitting body 521 that emits light to show the marker MK from among the plurality of light-emitting bodies 521 forming the display 52. The light-emitting body 521 that emits light is referred to as a target light-emitting body (Step S3).

Specifically, the display controller 60 obtains a remainder by dividing the remaining time calculated in Step S2 by the rotation speed of the turntable RP1. The display controller 60 then identifies, as the target light-emitting body, a light-emitting body 521 provided at an angle corresponding to the remainder relative to the virtual playing position, from among the plurality of light-emitting bodies 521 defining the display 52.

Next, the display controller 60 makes the target light-emitting body emit light to show the marker MK (Step S4). At this time, the display controller 60 monitors the remaining time and changes a light-emitting state of the target light-emitting body according to the remaining time.

For example, in a case where the remaining time is more than a predetermined first threshold, the display controller 60 makes the target light-emitting body blink at a first frequency. Further, in a case where the remaining time is less than or equal to the first threshold and is more than a second threshold less than the first threshold, the display controller 60 makes the target light-emitting body blink at a second frequency more than the first frequency. Further, in a case where the remaining time is less than or equal to the second threshold, the display controller 60 makes the target light-emitting body light. By determining the second threshold to be, for example, a time required for one rotation of the turntable RP1, an operator can recognize that the playing position reaches the point before the turntable RP1 makes one rotation.

It should be noted that the light-emitting state of the target light-emitting body changed by the display controller 60 is not limited to blinking and lighting. For example, in a case where each light-emitting body 521 can emit light in a plurality of colors, the display controller 60 may change the light-emitting state by changing an emission color of the target light-emitting body.

Next, the display controller 60 counts an elapsed time from receiving the point information to determine whether or not the current playing position reaches the point (Step S5). In other words, in Step S5, the display controller 60 determines whether or not the remaining time is zero.

When determining that the remaining time is not zero (i.e., does not reach the point) in the determination process in Step S5, the display controller 60 returns to Step S4. Thus, the light-emitting state of the target light-emitting body is controlled according to the remaining time.

When determining that the remaining time is zero (i.e., reaches the point) in the determination process in Step S5, the display controller 60 turns off the target light-emitting portion (Step S6). It should be noted that the display controller 60 may determine that the current playing position reaches the point when the operation unit 5 receives information from the playing device 2 showing that the current playing position reaches the point. Further, lighting control performed by the display controller 60 in Step S6 is not limited to turning off the target light-emitting portion. For example, in a case where each light-emitting body 521 can emit light in a plurality of colors, the display controller 60 may change the light-emitting state by changing an emission color of the target light-emitting body.

When Step S6 is completed, the display controller 60 ends the marker display process. Meanwhile, in a case where new point information is received in the marker display process, for example, due to a change of the music data to be played, the display controller 60 terminates the marker display process being performed and performs another marker display process based on the newly received point information.

It should be noted that in a case where point information including a plurality of specified times (i.e., times of points) is received, i.e., a case where a plurality of points are set in a single piece of music data, the display controller 60 performs Steps S2 to S6 on each time of point. At this time, each marker MK may be shown by changing a light-emitting state of a target light-emitting body showing each marker MK as described above. For example, the markers MK may be shown by having different lighting colors for the plurality of target light-emitting bodies. Meanwhile, the display controller 60 may display only a marker MK for the smallest remaining time.

Further, in a case where the point information including the time from the play start position to the point in the music data is received as point information, i.e., a case where point information including the remaining time is received, the display controller 60 can omit Step S2.

### Effects of Exemplary Embodiment

The playing system 1 according to the exemplary embodiment described above can achieve the following effects.

The operation unit 5 as a display device includes: the rotating body 51 placed on the turntable RP1 of the record player RP to rotate with the turntable RP1; and the display 52 provided on the rotating body 51 along the circumferential direction around the rotation center of the rotating body 51 and configured to display the marker MK corresponding to a point set in advance in a music piece to be played.

In this arrangement, an operator can check a position of a point such as a cue point or scratch point set in advance in the music data being played by checking the marker MK displayed on the display 52. Thus, an operator does not need to adhere a sticker to each record disk and can easily perform a rotation operation on both the operation unit 5 and the turntable RP1.

Further, the marker is shown on the display 52 of the rotating body 51 rotating with the turntable RP1. Thus, even in performing a scratch operation where the turntable RP1 having the rotating body 51 thereon is rotated in forward and reverse directions, a delay in the display is not caused by a detection process or determination process and the position of the marker is not shifted. Thus, the marker can be displayed irrespective of the rotation operation performed on the rotating body 51 and the turntable RP1.

The display 52 includes the plurality of light-emitting bodies 521 arranged concentrically around the rotation center of the rotating body 51. A part of the plurality of light-emitting bodies 521 shows the marker MK.

In this arrangement, a part of the plurality of light-emitting bodies 521 concentrically arranged on the rotating body 51 rotating displays the marker MK. This allows the marker MK to be shown at any position on the circumference of the rotating body 51.

The display 52 displays the time from the current playing position to the point in the music piece in a form of the light-emitting state of a part of the plurality of light-emitting bodies 521 showing the marker MK.

This arrangement allows an operator to recognize the time from the current playing position to the point in the music piece. The operator can thus easily do DJ performance.

The point set in the music data is shown by the specified time in the music data. In a case where the time from the current playing position to the specified time in the music piece is determined as the remaining time, the display 52 displays the marker MK at a position with the angle corresponding to the remainder obtained by dividing the remaining time by the rotation speed of the rotating body 51 (i.e., the rotation speed of the turntable RP1), relative to the virtual playing position on the rotating body 51 corresponding to the current playing position.

In this arrangement, since the marker MK is shown at this angle with respect to the current playing position, the rotating body 51 of the operation unit 5 placed on the turntable RP1 can be assumed as a record disk to which a mark such as a sticker is attached. The operator can thus easily do DJ performance using the turntable RP1.

The operation unit 5 includes the plurality of hall elements 54 provided in the rotating body 51 along the circumferential direction around the rotation center of the rotating body 51 and configured to act with the magnetic body 43 provided on the record player RP. The virtual playing position is set based on an arrangement position of a hall element 54 outputting an electric signal generated by Hall effect with the magnetic body 43 when the point information is received, from among the plurality of hall elements 54.

In this arrangement, the position of the magnetic body 43 provided on the record player RP can be assumed as the position of the stylus, which is put on the record disk. Further, the marker MK corresponding to the point can be displayed at a more accurate position by showing the marker MK at the position with the angle corresponding to the remainder relative to the virtual playing position set as described above.

The operation unit 5 includes the communication unit 56 and the display controller 60. The communication unit 56, which is provided in the rotating body 51, communicates with the playing device 2 (an external device) to receive the point information regarding the point from the playing device 2. The display controller 60, which is provided in the rotating body 51, displays, on the display 52, the marker MK that is based on the point information received by the communication unit 56.

In this arrangement, since the point information is received from the playing device 2 playing the music data, the display 52 can display the marker MK corresponding to the point set in the music data being played.

The operation device 3 includes the operation unit 5 serving as a display device. That is, the operation device 3 includes the rotation detecting unit RD provided in the rotating body 51 and configured to detect the rotation state of the rotating body 51 and the transmitter 59 configured to transmit the operation information including the rotation information that shows the rotation state of the rotating body 51 detected by the rotation detecting unit RD. As described above, the rotation detecting unit RD includes the magnetic body 43, the hall elements 54 and the gyroscope sensor 55.

In this arrangement, when an operator operates the operation unit 5 configured to display the marker MK like a record disk to which a mark such as a sticker is attached, the player 253 of the playing device 2 can add a variety of sound effects to the music data being played.

### Modifications of Exemplary Embodiment

In the above exemplary embodiment, the operation unit 5 as a display device transmits the operation information including the rotation information showing the rotation state of the operation unit 5 as rotation information showing the rotation state of the turntable RP1, and displays the marker set in the music data being played based on the marker information received from the playing device 2. The operation unit 5, however, is not limited thereto. The operation unit 5 may not transmit operation information. For example, provided that the record player RP transmits the rotation information showing the rotation state of the turntable RP1 and operation information including a detection result of detecting an operator's pressing operation performed on the turntable RP1, the operation unit 5 may be configured to only display a marker. That is, a rotating body 51 including at least the display 52 and the display controller 60 may be configured as a display device. Such a display device may be further arranged on a record disk placed on the turntable RP1 in use. It is preferable that the display device includes the hall elements 54 used for setting a virtual playing position and the communication unit 56 configured to receive marker information.

In the above exemplary embodiment, the display 52 is provided in the inner region of the rotating body 51. The arrangement, however, is not limited thereto. The display 52 may be provided in an outer region of the rotating body 51, for example, at an outer circumferential edge thereof.

In the above exemplary embodiment, the display 52 includes the plurality of light-emitting bodies 521 arranged concentrically around the rotation center of the rotating body 51. The display 52, however, is not limited thereto. The display 52 may be in a form of a display panel including a plurality of pixels. Also in this arrangement, it is preferable that a region where the marker MK can be displayed is a concentric region around the rotation center of the rotating body 51.

Further, the number of the light-emitting bodies 521 showing the marker MK is not limited to one. That is, the marker MK may be shown by a plurality of light-emitting bodies 521.

In the above exemplary embodiment, the remaining time from the current playing position to the point in the music piece is shown by the light-emitting state of the light-emitting body 521 showing the marker MK. The arrangement, however, is not limited thereto. The light-emitting body 521 showing the marker MK may light or blink irrespective of the remaining time. That is, the remaining time may not be displayed.

Further, the remaining time may be displayed by another display. The operation unit 5 as a display device may include such another display.

Further, the remaining time may be displayed by a different light-emitting body 521 from the target light-emitting body (the light-emitting body 521 showing the marker MK). In this arrangement, for example, the different light-emitting body 521 may emit light in a different color from that of the target light-emitting body or at a different frequency from that of the target light-emitting body to display the remaining time.

Further, the light-emitting state of the light-emitting body 521 showing the marker MK may depend on a type of point. For example, an emission color of a light-emitting body 521 showing a marker MK corresponding to a cue point may be different from an emission color of a light-emitting body 521 showing a marker MK corresponding to a scratch point. In this arrangement, it is preferable that the point information transmitted by the playing device 2 and received by the operation unit 5 serving as a display device may include types of points.

In the above exemplary embodiment, the point information is transmitted wirelessly from the playing device 2 serving as an external device and is received by the communication unit 56 of the operation unit 5. The arrangement, however, is not limited thereto. The point information may be transmitted by any other external device than the playing device 2. Alternatively, the point information may be stored in the operation unit 5 in advance. In this arrangement, the display controller 60 may display the marker MK on the display 52 based on point information selected by an operator from among point information stored in the operation unit 5 in advance.

In the above exemplary embodiment, the marker MK is shown by the light-emitting body 521 positioned at the angle corresponding to the remainder obtained by dividing the remaining time by the rotation speed of the rotating body 51 (i.e., the rotation speed of the turntable RP1), relative to the virtual playing position on the rotating body 51. The method, however, is not limited thereto. Any other method that determines, on the display 52, the position of the light-emitting body 521 showing the marker MK may be used.

In the above exemplary embodiment, the virtual playing position is set based on the arrangement position of the hall element 54 outputting the electric signal generated by Hall effect with the magnetic body at a timing of receiving the point information, from among the plurality of hall elements 54 provided along the circumferential direction of the rotating body 51. The arrangement, however, is not limited thereto. Provided that the rotating body 51 can recognize a predetermined direction from among directions perpendicular to a rotation axis of the rotating body 51, the position in the predetermined direction of the rotating body 51 may be determined as the virtual playing position. For example, a position on the operation unit 5 placed on the turntable RP1, where the stylus provided to the tone arm RP2 is put, may be defined as the virtual playing position.

### EXPLANATION OF CODES

1...playing system, 2...playing device, 3...operation device, 4...stationary body, 43... magnetic body, 5... operation unit (display device), 51... rotating body, 52... display, 521...light-emitting body, 53...touch sensor, 54... hall element, 55...gyroscope sensor, 56...communication unit, 57...controller, 58...analyzer, 59...transmitter, 60... display controller, MK... marker, RD... rotation detecting unit, RP...record player, RP1...turntable

## Claims

1. A display device (5) disposed on a turntable (RP1) of a record player (RP), the display device
(5) comprising:
a rotating body (51) configured to rotate with the turntable (RP1);
a display (52) provided on the rotating body (51) along a circumferential direction around a rotation center of the rotating body (51) and configured to display a marker (MK) corresponding to a point set in advance in a music piece to be played;
a plurality of hall elements (54) provided in the rotating body (51) along the circumferential direction around the rotation center of the rotating body (51) and configured to act with a magnetic body (43) provided on the record player (RP) to output an electric signal; and
a display controller (60) provided in the rotating body (51) and configured to set a virtual playing position on the rotating body (51) based on the electric signal outputted by the plurality of hall elements (54), the virtual playing position corresponding to the current playing position of the music piece, and to display on the display (52) the marker (MK) based on the virtual playing position.

2. The display device (5) according to claim 1,
wherein the display (52) comprises a plurality of light-emitting bodies (521) arranged concentrically around the rotation center of the rotating body (51), and
a part of the plurality of light-emitting bodies (521) shows the marker (MK).

3. The display device (5) according to claim 2, wherein the display (52) displays a time from a current playing position to the point in the music piece in a form of a light-emitting state of the part of the plurality of light-emitting bodies (521), the part showing the marker (MK).

4. The display device (5) according to any of claims 1 to 3,
wherein the point is shown by a specified time, which is specified in the music piece, and
in a case where a time from the current playing position to the specified time in the music piece is determined as a remaining time, the display (52) displays the marker (MK) at a position with an angle corresponding to a remainder obtained by dividing the remaining time by a rotation speed of the rotating body (51), relative to the virtual playing position.

5. The display device (5) according to claim 4,
wherein the virtual playing position is set based on an arrangement position of a hall element (54) outputting the electric signal generated by Hall effect with the magnetic body (43) at a time of receiving point information regarding the point, from among the plurality of hall elements (54).

6. The display device (5) according to any of claims 1 to 5, further comprising:
a communication unit (56) provided in the rotating body (51) and configured to communicate with an external device (2) to receive the point information regarding the point from the external device (2);
wherein the display controller (60) is configured to display, on the display (52), the marker (MK) that is accordance with the point information received by the communication unit (56).

7. An operation device (3) comprising:
the display device (5) according to any of claims 1 to 6;
a rotation detecting unit (RD) configured to detect a rotation state of the rotating body (51); and
a transmitter (59) configured to transmit rotation information showing the rotation state of the rotating body (51) detected by the rotation detecting unit (RD), wherein
the rotation detecting unit (RD) comprises
the plurality of hall elements (54),
the magnetic body (43), and
a gyroscope sensor (55) provided in the rotating body (51).

## Patentansprüche

1. Eine Anzeigevorrichtung (5), die auf einem Drehteller (RP1) eines Plattenspielers (RP) angeordnet ist, die Anzeigevorrichtung (5) umfassend:
einen Drehkörper (51), der dazu eingerichtet ist, sich mit dem Drehteller (RP1) zu drehen;
eine Anzeige (52), die auf dem Drehkörper (51) entlang einer Umfangsrichtung um ein Drehzentrum des Drehkörpers (51) angeordnet und dazu eingerichtet ist, eine Markierung (MK) anzuzeigen, die einem vorab festgelegten Punkt in einem abzuspielenden Musikstück entspricht;
eine Vielzahl von Hall-Elementen (54), die in dem Drehkörper (51) entlang der Umfangsrichtung um das Drehzentrum des Drehkörpers (51) angeordnet und dazu eingerichtet sind, mit einem an dem Plattenspieler (RP) vorgesehenen Magnetkörper (43) zu agieren, um ein elektrisches Signal auszugeben; und
eine Anzeigesteuerung (60), die in dem rotierenden Körper (51) angeordnet und dazu eingerichtet ist, auf der Grundlage des von der Vielzahl von Hall-Elementen (54) ausgegebenen elektrischen Signals eine virtuelle Abspielposition auf dem Drehkörper (51) festzulegen, wobei die virtuelle Abspielposition der aktuellen Abspielposition des Musikstücks entspricht, und auf der Anzeige (52) die Markierung (MK) auf der Grundlage der virtuellen Abspielposition anzuzeigen.

2. Die Anzeigevorrichtung (5) gemäß Anspruch 1,
wobei die Anzeige (52) eine Vielzahl von konzentrisch um das Drehzentrum des Drehkörpers (51) angeordneten lichtemittierenden Körpern (521) umfasst, und
ein Teil der Vielzahl von lichtemittierenden Körpern (521) die Markierung (MK) zeigt.

3. Die Anzeigevorrichtung (5) gemäß Anspruch 2, wobei die Anzeige (52) eine Zeit von einer aktuellen Abspielposition zu dem Punkt in dem Musikstück in Form eines lichtemittierenden Zustands des Teils der Vielzahl von lichtemittierenden Körpern (521) anzeigt, wobei der Teil die Markierung (MK) zeigt.

4. Die Anzeigevorrichtung (5) gemäß einem der Ansprüche 1 bis 3,
wobei der Punkt durch eine bestimmte Zeit angezeigt wird, die in dem Musikstück festgelegt ist, und
in einem Fall, in dem eine Zeit von der aktuellen Abspielposition bis zu der bestimmten Zeit in dem Musikstück als eine verbleibende Zeit ermittelt wird, die Anzeige (52) die Markierung (MK) an einer Position mit einem Winkel anzeigt, der einem Rest entspricht, der durch Division der verbleibenden Zeit durch eine Drehgeschwindigkeit des Drehkörpers (51) relativ zur virtuellen Abspielposition erhalten wird.

5. Die Anzeigevorrichtung (5) gemäß Anspruch 4,
wobei die virtuelle Abspielposition auf der Grundlage einer Anordnungsposition eines Hall-Elements (54), welches das durch den Hall-Effekt erzeugte elektrische Signal ausgibt, mit dem Magnetkörper (43) zu einem Zeitpunkt des Empfangens von Punktinformationen bezüglich des Punktes aus der Vielzahl von Hall-Elementen (54) festgelegt wird.

6. Die Anzeigevorrichtung (5) gemäß einem der Ansprüche 1 bis 5, ferner umfassend:
eine Kommunikationseinheit (56), die in dem Drehkörper (51) angeordnet und dazu eingerichtet ist, mit einer externen Vorrichtung (2) zu kommunizieren, um die Punktinformation bezüglich des Punktes von der externen Vorrichtung (2) zu empfangen;
wobei die Anzeigesteuerung (60) dazu eingerichtet ist, auf der Anzeige (52) die Markierung (MK), die der von der Kommunikationseinheit (56) empfangenen Punktinformation entspricht, anzuzeigen.

7. Eine Bedienvorrichtung (3) umfassend:
die Anzeigevorrichtung (5) gemäß einem der Ansprüche 1 bis 6;
eine Rotationsdetektionseinheit (RD), die dazu eingerichtet ist, einen Rotationszustand des Drehkörpers (51) zu detektieren; und
einen Sender (59), der dazu eingerichtet ist, Rotationsinformationen zu senden, die den von der Rotationsdetektionseinheit (RD) detektierten Rotationszustand des Drehkörpers (51) zeigen, wobei
die Rotationsdetektionseinheit (RD) umfasst:
die Vielzahl von Hall-Elementen (54),
den Magnetkörper (43) und
einen in dem Drehkörper (51) angeordneten Gyroskopsensor (55).

## Revendications

1. Dispositif d'affichage (5) disposé sur un plateau tournant (RP1) d'un tourne-disque (RP), le dispositif d'affichage (5) comprenant :
un corps tournant (51) configuré pour tourner avec le plateau tournant (RP1) ;
un affichage (52) prévu sur le corps tournant (51) le long d'une direction circonférentielle autour d'un centre de rotation du corps tournant (51) et configuré pour afficher un marqueur (MK) correspondant à un point défini à l'avance dans un morceau de musique à jouer ;
une pluralité d'éléments Hall (54) prévus dans le corps tournant (51) le long de la direction circonférentielle autour du centre de rotation du corps tournant (51) et configurés pour agir avec un corps magnétique (43) prévu sur le tourne-disque (RP) afin de sortir un signal électrique ; et
un contrôleur d'affichage (60) prévu dans le corps tournant (51) et configuré pour définir une position de lecture virtuelle sur le corps tournant (51) sur la base du signal électrique sorti par la pluralité d'éléments Hall (54), la position de lecture virtuelle correspondant à la position de lecture actuelle du morceau de musique, et pour afficher sur l'affichage (52) le marqueur (MK) sur la base de la position de lecture virtuelle.

2. Le dispositif d'affichage (5) selon la revendication 1,
dans lequel l'affichage (52) comprend une pluralité de corps émetteurs de lumière (521) disposés de manière concentrique autour du centre de rotation du corps tournant (51), et
une partie de la pluralité de corps émetteurs de lumière (521) montre le marqueur (MK).

3. Le dispositif d'affichage (5) selon la revendication 2, dans lequel l'affichage (52) affiche un temps à partir de la position de lecture actuelle au point dans le morceau de musique sous une forme d'un état d'émission de lumière de la partie de la pluralité de corps émetteurs de lumière (521), la partie montrant le marqueur (MK).

4. Le dispositif d'affichage (5) selon l'une quelconque des revendications 1 à 3,
dans lequel le point est montré par un temps spécifié, qui est spécifié dans le morceau de musique, et
dans le cas où un temps à partir de la position de lecture actuelle au temps spécifié dans le morceau de musique est déterminé comme un temps restant, l'affichage (52) affiche le marqueur (MK) à une position avec un angle correspondant à un reste obtenu en divisant le temps restant par une vitesse de rotation du corps tournant (51), par rapport à la position de lecture virtuelle.

5. Le dispositif d'affichage (5) selon la revendication 4,
dans lequel la position de lecture virtuelle est définie sur la base d'une position d'agencement d'un élément Hall (54) sortant le signal électrique généré par l'effet Hall avec le corps magnétique (43) à un moment de réception d'informations de point concernant le point, de parmi la pluralité d'éléments Hall (54).

6. Le dispositif d'affichage (5) selon l'une quelconque des revendications 1 à 5, comprenant en outre :
une unité de communication (56) prévue dans le corps tournant (51) et configurée pour communiquer avec un dispositif externe (2) afin de recevoir les informations de point concernant le point provenant du dispositif externe (2) ;
dans lequel le contrôleur d'affichage (60) est configuré pour afficher, sur l'affichage (52), le marqueur (MK) qui est conforme aux informations de point reçues par l'unité de communication (56).

7. Dispositif d'opération (3) comprenant :
le dispositif d'affichage (5) selon l'une quelconque des revendications 1 à 6 ;
une unité de détection de rotation (RD) configurée pour détecter un état de rotation du corps tournant (51) ; et
un émetteur (59) configuré pour transmettre des informations de rotation montrant l'état de rotation du corps tournant (51) détecté par l'unité de détection de rotation (RD), dans lequel
l'unité de détection de rotation (RD) comprend
la pluralité d'éléments Hall (54),
le corps magnétique (43), et
un capteur gyroscopique (55) prévu dans le corps tournant (51).
